(19) **Europäisches Patentamt**
**European Patent Office**
**Office européen des brevets**

(11) Numéro de publication : **0 398 772 B1**

(12) **FASCICULE DE BREVET EUROPEEN**

(45) Date de publication du fascicule du brevet :
**29.06.94 Bulletin 94/26**

(51) Int. Cl.[5] : **G05D 19/02,** G01J 3/453,
F16F 15/00, G01J 9/02

(21) Numéro de dépôt : **90401015.4**

(22) Date de dépôt : **12.04.90**

(54) **Dispositif de commande en déplacement sans vibrations d'un élément optique dans un interféromètre stellaire et interféromètre stellaire le comportant.**

(30) Priorité : **17.04.89 FR 8905060**

(43) Date de publication de la demande :
**22.11.90 Bulletin 90/47**

(45) Mention de la délivrance du brevet :
**29.06.94 Bulletin 94/26**

(84) Etats contractants désignés :
**DE ES FR GB**

(56) Documents cités :
**EP-A- 0 281 906
FR-A- 2 593 455
US-A- 4 132 940
US-A- 4 193 693
US-A- 4 498 038
APPLIED OPTICS vol.14,no.9,septembre 1975,pages 2067-2084,New York,US;P.CONNES et al.:"Astronomical Fourier Spectrometer"**

(73) Titulaire : **AEROSPATIALE Société Nationale Industrielle
37, Boulevard de Montmorency
F-75781 Paris Cédex 16 (FR)**

(72) Inventeur : **Koehler, Bertrand
2, rue Panisse
F-06400 Cannes (FR)**
Inventeur : **Manil, Emmanuel
8, rue des Roses
F-06110 Le Cannet Rocheville (FR)**
Inventeur : **Chapellier, Jacques
23, Chemin des Vallons
F-06110 Le Cannet (FR)**

(74) Mandataire : **Rinuy, Santarelli
14, avenue de la Grande Armée
F-75017 Paris (FR)**

## Description

La présente invention concerne un dispositif perfectionné de commande en déplacement d'un mobile tel qu'un élément optique d'un système d'interférométrie stellaire, ou plus généralement d'un dispositif interférométrique, tel qu'un spectromètre à transformée de FOURIER.

Elle a pour objet de stabiliser dynamiquement un mobile au cours d'un mouvement programmé, de façon à éliminer l'effet des vibrations.

Un tel déplacement programmé sans vibration est nécessaire, par exemple pour contrôler une ligne à retard optique prévue au sein d'un interféromètre stellaire à recombinaison cohérente. Dans un tel cas, lorsque la distance (appelée base) séparant les télescopes est de l'ordre de 100 mètres, l'égalisation des chemins optiques, malgré la rotation de la Terre, nécessite un déplacement du dispositif rétro-réflecteur de la ligne à retard optique sur une distance de plusieurs mètres, avec une vitesse de quelques dizaines de millimètres par seconde, et une précision de positionnement, en valeur moyenne de quelques microns, et en valeur instantanée (pendant un temps de pose de quelques centièmes de seconde) de quelques nanomètres (amplitude des vibrations) : les contraintes sont donc plus sévères sur l'erreur dynamique que sur l'erreur statique.

De telles caractéristiques de déplacement sont également nécessaires dans le cas où l'on chercherait à réaliser l'égalité des chemins optiques par le déplacement des télescopes eux-mêmes.

Dans la thèse de Doctorat d'Etat soutenue par L. KOECHLIN le 15 Novembre 1985 à l'Université de Nice sur "Exploitation astrophysique de l'interféromètre à deux télescopes du CERGA" il a déjà été décrit une table optique de recombinaison des faisceaux de l'interféromètre, jouant le rôle de ligne à retard.

Cette table se déplace sur des rails rectifiés. Elle est mue par un moteur couple asservi en position et vitesse. La transmission est réalisée par une liaison vis-écrou de précision.

Ce type de dispositif de déplacement présente l'inconvénient d'engendrer des vibrations, surtout à vitesse élevée (quelques millimètres par seconde) qui proviennent à la fois du système de guidage et de la transmission. Ces vibrations détériorent la précision des mesures de contraste des franges.

Un guidage sur coussins d'air apporte une amélioration, mais des instabilités d'écoulement génèrent souvent des vibrations non négligeables à hautes fréquences.

Par la publication de R.W. HOLM : thèse MIT 1986 "A high Speed High-Resolution Optical Delay Line For Stellar Interferometry Applications", on connaît un dispositif de déplacement d'un "oeil de chat" dans une ligne à retard, constitué par un chariot de type esclave se déplaçant sur des rails, ledit chariot comportant un châssis, mobile sur des pivots flexibles et sur lequel est fixé l'oeil de chat.

Le miroir secondaire de l'oeil de chat y est porté par un actionneur piézoélectrique. La position du châssis mobile par rapport au chariot est contrôlée par un détecteur de déplacement et un actionneur linéaire du type Haut-Parleur ("voice coil"). Enfin, le déplacement du chariot est assuré par un moteur pas-à-pas.

Le chemin optique introduit par la ligne à retard y est mesuré par un interféromètre laser. Le signal d'erreur est injecté dans la boucle d'asservissement de l'actionneur piézo-électrique. La saturation de cet actionneur est évitée par l'action de l'actionneur linéaire, et la saturation de l'actionneur linéaire est évitée par l'action du moteur pas-à-pas (d'où appellation d'esclave). Il y a pour cela trois boucles d'asservissement imbriquées l'une dans l'autre.

Ce dispositif de déplacement permet de réaliser un déplacement sans vibrations de l'oeil de chat, assimilable à un déplacement sans frottements. Il a de bonnes performances car le signal d'erreur correspond directement à la grandeur à asservir, c'est-à-dire au chemin optique.

Cependant, il est mal adapté aux grandes vitesses du fait que la métrologie laser devrait alors avoir une résolution de quelques nanomètres alors que le rapport vitesse maximale de variation de chemin optique du chariot sur résolution est limité par l'électronique pour des raisons de faisabilité.

De plus, l'actionneur piézo-électrique ne peut pas délivrer une force suffisante pour que ce dispositif soit applicable au déplacement de grosses masses telles que des télescopes.

Enfin, ce dispositif est onéreux en raison de la présence de trois boucles d'asservissement et en raison de la nécessité d'avoir une métrologie laser performante laquelle ne peut fonctionner bien que dans une enceinte sous vide.

Un dispositif de ce type avait déjà été décrit précédemment dans la publication : P. CONNES 1975 Applied Optics, Vol 14 n° 9.p 2067 - 2084.

Le but de la présente invention est de décrire un dispositif de déplacement programmé d'un chariot portant, par l'intermédiaire d'une liaison flexible, une charge utile dont le déplacement doit s'effectuer sans vibration sur une grande course et à grande vitesse, tel que ceux utilisés pour les lignes à retard d'un interféromètre stellaire et ne présentant pas les inconvénients cités ci-dessus.

L'invention propose un dispositif de commande en déplacement sans vibrations destiné au contrôle statique et dynamique d'un élément optique mobile, au sein d'un dispositif interférométrique, suivant une direc-

2

tion, comportant une voie de guidage, un chariot portant une charge utile comportant cet élément optique et mobile le long de la voie de guidage, un moteur pour l'entraînement de ce chariot le long de cette voie de guidage, un élément de commande en entraînement connecté à ce moteur d'entraînement pour déplacer ce chariot selon une loi de consigne prédéterminée, cette charge utile étant liée au chariot par des éléments de liaison flexible autorisant parallèlement à ladite direction un débattement relatif entre le chariot et la charge utile, et au moins un actionneur étant prévu pour agir sur au moins une partie de l'élément optique sous le contrôle d'au moins une boucle d'asservissement en stabilisation connectée à au moins un second capteur, ce dispositif étant caractérisé en ce que cette boucle d'asservissement en stabilisation est indépendante de l'élément de commande en entraînement, en ce que le second capteur est un accéléromètre porté par la charge utile et sensible à l'accélération de la charge utile parallèlement à ladite direction, en ce que l'actionneur agit sur l'ensemble de la charge utile en prenant appui sur le chariot, en ce que cette boucle d'asservissement en stabilisation comporte un étage de filtrage du signal de l'accéléromètre, et en ce que l'élément de commande en entraînement comporte une boucle d'asservissement connectée à un capteur de position adapté à détecter la position du chariot sur la voie de guidage.

En pratique, la charge utile est munie d'un accéléromètre mesurant les accélérations dans le sens du déplacement du chariot et porte un élément primaire d'un actionneur linéaire électromagnétique dont l'élément secondaire est fixé sur le chariot et la force fournie par le moteur linéaire est contrôlée par le signal issu de l'accéléromètre de façon à ce que les vibrations du chariot ne soient pas transmises à l'élément utile.

Selon des dispositions préférées :
- l'étage de filtrage de la boucle d'asservissement en stabilisation est du deuxième ordre, admettant une fonction de transfert F(p) de la forme :

$$F(p) \;=\; \frac{a_2 p^2 \;+\; a_1 p \;+\; a_o}{p^2 \;+\; b_1 p \;+\; b_o}$$

- l'accéléromètre est du type piézo-électrique, ou pendule asservi,
- l'actionneur est du type "haut-parleur",
- la voie de guidage est à rouleaux croisés,
- le moteur d'entraînement est un moteur linéaire sans balais,
- le capteur de position est du type incrémental,
- la boucle d'asservissement en entraînement est du type numérique position/vitesse,
- l'élément optique est un rétroréflecteur du type "oeil de chat" prévu dans une ligne à retard,
- l'élément optique est l'un des télescopes de l'interféromètre stellaire, mobile en direction d'une station de recombinaison.

L'invention propose également un interféromètre stellaire comportant un ou plusieurs dispositifs de commande en déplacement du type précité.

En fait, la boucle d'asservissement en stabilisation que préconise l'invention pourrait sembler présenter en elle-même des analogies avec des dispositifs anti-vibrations qui ont déjà été proposés dans des domaines tout à fait différents de celui concerné par l'invention, mais ces dispositifs se placent le plus souvent dans un domaine technique où l'on ne cherche pas un aussi haut niveau d'amortissement (FR-2.593.455, WO-81/00237, FR-2.415.330, ou EP-0.222.329) et sont généralement complexes, faisant parfois intervenir la mesure de plusieurs paramètres tels que des positions et des efforts ou moments. On connaît par ailleurs, de par le document EP-0.202.880 un dispositif anti-vibrations de hautes performances, mais celui-ci est le seul élément d'asservissement intervenant puisque la source de vibrations est fixe (c'est le sol lui-même). En outre, les amplitudes des accélérations perturbatrices à éliminer sont beaucoup plus faibles que dans le domaine de l'invention du fait que le déplacement à haute vitesse du chariot s'accompagne inévitablement de perturbations importantes (irrégularités du guidage, frottements...). Enfin, les lois de contrôle décrites ne permettent pas de s'affranchir des biais éventuels présents dans le signal accélérométrique.

En pratique, l'originalité de l'invention réside notamment dans le fait que, pour amortir très efficacement les vibrations d'un élément optique mobile suivant une trajectoire donnée selon une cinétique donnée, elle enseigne, à l'encontre du préjugé de l'homme de métier en la matière, de renoncer à toute interconnexion entre les asservissements en entraînement et ceux en stabilisation ; de manière surprenante la grande simplicité (et la grande fiabilité) qui en résulte a pu être combinée avec un excellent amortissement.

Des objets, caractéristiques et avantages de l'invention ressortent de la description qui suit, donnée à titre d'exemple non limitatif, en regard des dessins annexés sur lesquels :
- la figure 1 est une vue schématique générale d'un système d'interférométrie stellaire incorporant un dispositif de commande en déplacement programmé sans vibrations conforme à l'invention ;
- la figure 2 est une vue schématique de ce dispositif ;
- la figure 3 en est une vue en élévation latérale ;

- la figure 4 en est une vue de gauche ;
- la figure 5 est une vue partielle montrant en élévation latérale le châssis de ce dispositif ;
- la figure 6 est une vue de droite de ce châssis;
- la figure 7 en est une vue de gauche ;
- la figure 8 est une vue schématique en plan d'un système d'interférométrie stellaire comprenant trois télescopes montés chacun sur un dispositif de commande en déplacement programmé sans vibrations, conformément à l'invention ;
- la figure 9 est un graphique illustrant les performances de la loi de commande préconisée par l'invention ; et

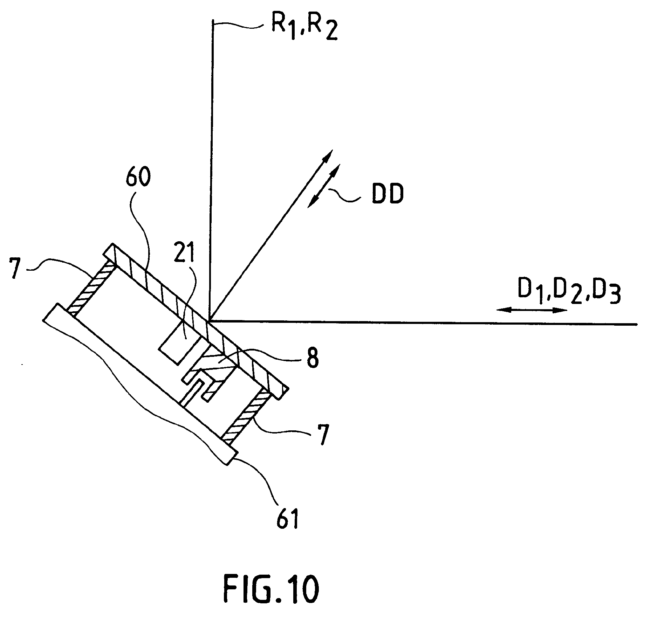

- la figure 10 est une vue en élévation latérale du dispositif de commande sans vibration dans le cas où l'élément optique à asservir est le miroir plan tertiaire d'un télescope ou le miroir plan constituant un sidérostat.

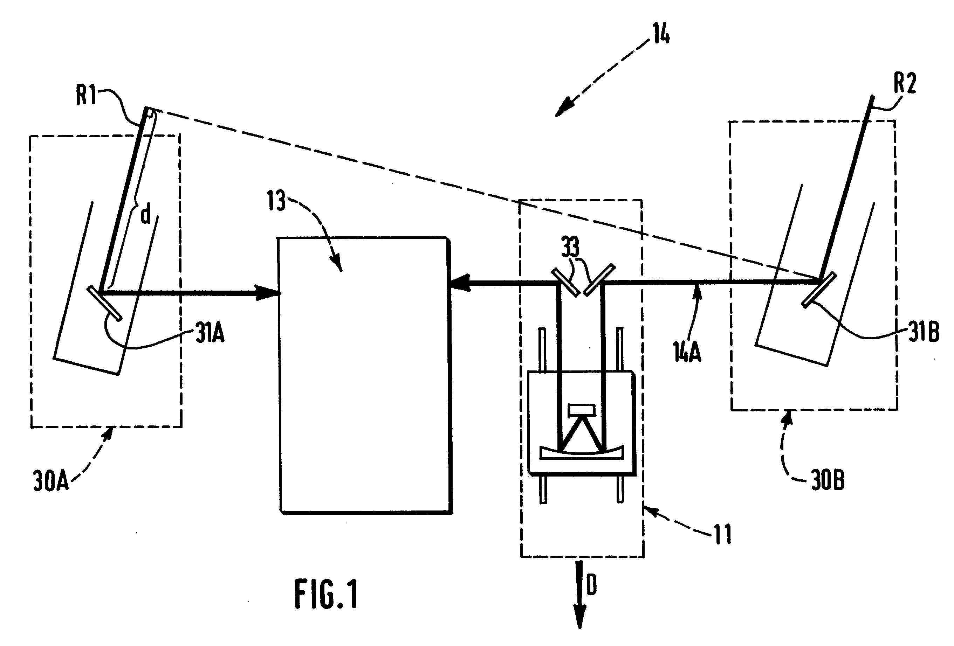

La figure 1 montre un interféromètre stellaire 14 comportant deux télescopes 30A et 30B recevant respectivement des rayonnements R1 et R2 provenant d'un même objet du ciel (non représenté). Ces télescopes comportent des miroirs 31 A et 31B qui renvoient ces rayonnements incidents vers une station 13 de recombinaison d'ondes dans laquelle se forment des franges d'interférences caractéristiques du rayonnement émis par cet objet.

Le problème est d'ajuster, à chaque instant, le chemin optique dans l'un 14A des bras de l'interféromètre stellaire afin de compenser en permanence des différences de marche $\underline{d}$ liées aux variations de la position, dans le ciel, de l'objet observé. La figure 1 montre la différence de marche à compenser. Cette différence de marche vaut B.sin Z où B est la distance séparant les télescopes 30A et 30B et Z est l'angle zénithal de l'objet. L'ajustement du chemin optique peut se faire soit par le déplacement des télescopes par rapport à la station de recombinaison 13, soit par l'introduction, dans un des bras de l'interféromètre, d'un dispositif 11 appelé "ligne à retard" constitué d'un rétroréflecteur optique mobile selon une direction D.

La première solution présente l'avantage d'offrir la maîtrise à tout instant de la configuration géométrique de l'interféromètre, ce qui permet d'optimiser la couverture du plan des fréquences spatiales mesurées (plan (u, v) ), ainsi que de minimiser le nombre de surfaces réfléchissantes sur le trajet optique.

La seconde solution qui est ici décrite en détail présente l'avantage d'être plus simple de réalisation et de mise en oeuvre.

Les spécifications techniques de besoins pour un dispositif de ligne à retard dépendent essentiellement de la distance séparant les télescopes, de l'orientation de la ligne joignant les télescopes par rapport à l'axe Nord-Sud, de la position, dans le ciel, des objets à observer, du temps de pose pendant lequel l'image des franges d'interférence est intégrée et de la précision requise sur la mesure du contraste des franges. Les spécifications essentielles sont :

1. la course linéaire de l'équipage mobile de la ligne à retard (quelques mètres),

2. la vitesse de déplacement du rétroréflecteur (variable de zéro à quelques dizaines de millimètres/seconde),

3. la précision de positionnement de l'équipage mobile (rétroréflecteur) en valeur moyenne (quelques micromètres),

4. le niveau de vibration du rétroréflecteur autour de sa position moyenne, en cours de déplacement. Ce niveau de vibration constitue le point le plus critique car il conditionne la précision (quelques pour cents) sur la mesure du contraste des franges. Il s'exprime en écart quadratique moyen de position (quelques nanomètres) sur une fenêtre temporelle correspondant au temps de pose (quelques dizaines de millisecondes).

La difficulté réside dans la satisfaction simultanée des spécifications 2 et 4.

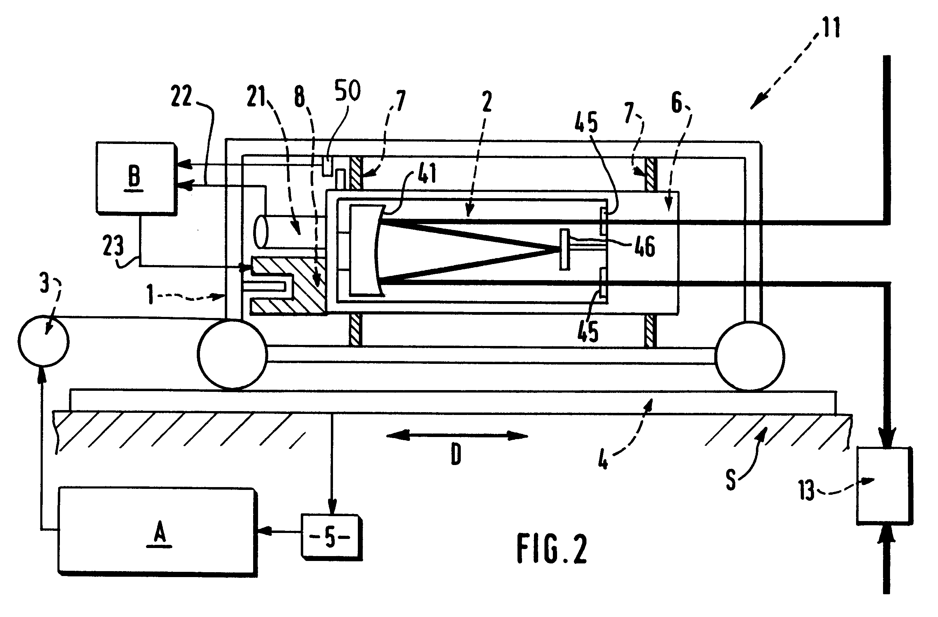

Ces contraintes sont satisfaites grâce au dispositif de la figure 2.

Il faut tout d'abord noter à propos de la figure 1 que, pour des raisons de lisibilité du dessin, la direction D a été représentée dans le même plan que celui des rayons R1 et R2, c'est-à-dire dans un plan sensiblement vertical. Toutefois, en pratique, cette direction est horizontale ; il suffit pour cela d'orienter convenablement les miroirs de renvoi 33 prévus à l'entrée et à la sortie de la ligne à retard 11. De préférence, mais pas nécessairement, la direction D est perpendiculaire à la direction commune des rayons entrant et sortant de cette ligne de retard.

De même à la figure 2, qui correspond pour l'essentiel à une vue dans un plan vertical, le trajet optique a été représenté dans ce plan pour des raisons de commodité alors qu'en pratique il est situé dans un plan horizontal.

Cette ligne à retard 11 comporte, outre les miroirs de renvoi 33 précités, un dispositif de commande en déplacement que l'on peut décomposer en une unité de translation et, porté par celle-ci, un étage de stabilisation.

4

L'unité de translation comporte un socle S portant un dispositif de guidage 4, un chariot mobile 1, un moteur 3 muni d'une transmission, et un capteur de position 5 relié à un asservissement A (avec un étage de puissance) contrôlant le moteur 3 en fonction des signaux de sortie du capteur de position et d'une loi de consigne élaborée à l'avance.

Pour des raisons de coût, cette unité de translation est constituée à partir de matériels disponibles sur le marché. Différentes technologies existent : guidage par galets sur rails rectifiés, par billes recirculantes, par friction, par rouleaux croisés, par coussin d'air (etc...), transmission par courroie, par tige entraînée par galet à friction, par vis de précision et écrou à recirculation de billes, (etc...), entraînement par moteur continu, moteur couple, moteur pas à pas, moteur linéaire (etc...).

L'exigence principale du dispositif étant un faible niveau de vibration en cours de déplacement, le choix entre ces différentes technologies est dicté par le niveau de vibration généré par chacun des éléments.

Un guidage par galets sur rails rectifiés est une bonne solution mais rarement commercialisée. Un guidage par billes recirculantes ou friction est générateur de vibrations, à haute vitesse notamment. Un guidage par rouleaux croisés non recirculants est meilleur qu'un guidage à billes recirculantes mais il est mal adapté aux grandes courses (supérieures à 1m). Un guidage sur coussin d'air peut apporter une amélioration bien que des instabilités de l'écoulement de l'air puissent parfois générer des vibrations importantes dans des gammes de fréquence entre 100 et 1000 Hz.

Une transmission par courroie fait en général apparaître des vibrations longitudinales engendrées par la souplesse de la courroie. Une transmission par tige et galet n'est applicable qu'à de faibles courses. Une transmission par vis-écrou est mal adaptée aux déplacements à haute vitesse et ne convient pas aux grandes courses.

Un moteur couple donne de bonnes performances à basse vitesse et permet un entraînement direct éliminant les vibrations engendrées par un réducteur. Un moteur pas à pas est mal adapté car le passage successif des pas se traduit par des vibrations longitudinales du chariot mobile. Un moteur linéaire présente l'avantage d'engendrer directement une force, sans contact, entre le socle et le chariot mobile éliminant ainsi la source de vibration que représente tout mécanisme de transmission.

La solution retenue est une unité de translation de course 1 m, comprenant un socle 5 en acier, un guidage par rouleaux croisés 4, un moteur linéaire 3 sans balais à aimants permanents fixes, un capteur de position incrémental 5 de type règle optique et un asservissement numérique de position/vitesse. Ce matériel est fabriqué par exemple par la Société ANORAD (USA) sous les références ANORIDE 14-40 et IAC-186.

L'étage de stabilisation porté par le chariot 1 comprend une liaison flexible 7 reliant un châssis 6 au chariot, une charge utile 2 solidaire du châssis, un capteur inertiel tel qu'un accéléromètre 21, un actionneur linéaire 8, et une boucle d'asservissement B. Dans le cadre d'une modification possible décrite ci-après, l'étage de stabilisation peut également comprendre un second capteur de position 50 mesurant la position relative de charge utile 2 par rapport au chariot 1.

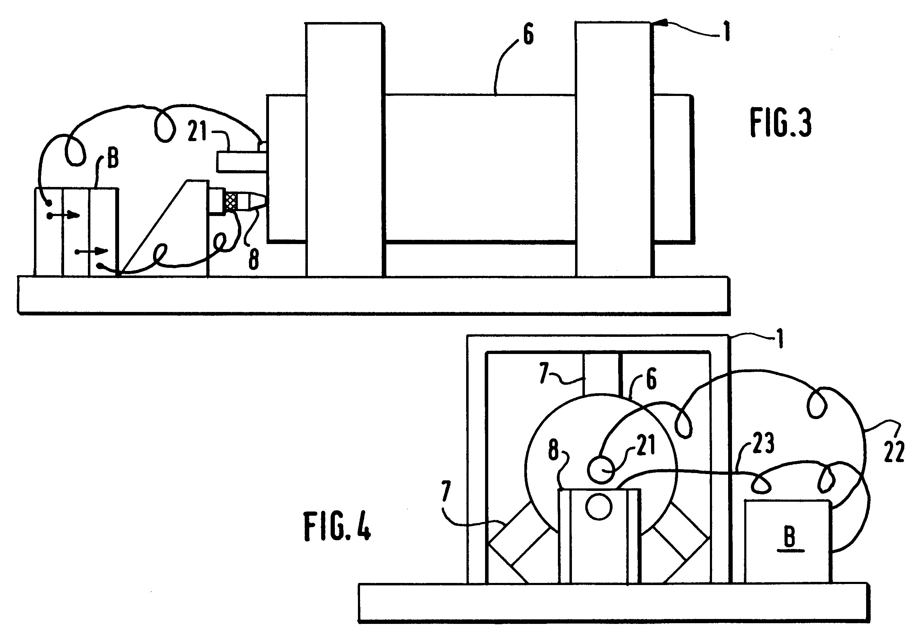

La liaison flexible 7 a pour rôle de permettre des déplacements relatifs dans la direction (D) entre le chariot 1 et le châssis 6. Cette liaison est ici réalisée par deux jeux décalés axialement de trois lames flexibles disposées à 120° comme indiqué sur la figure 4. Cette liaison présente l'avantage d'être sans jeu et sans frottement. La fréquence propre naturelle de la liaison se situe autour de 5 Hz pour une masse de (châssis + charge utile) de 15 kg. En variante de réalisation non représentée, cette liaison peut être constituée par seulement la lame supérieure de chaque jeu, en tirant partie de la gravité.

Pour des raisons de lisibilité de la figure 4, la partie couvercle du chariot a été réduite à deux portions portant les liaisons flexibles 7, ce qui rend visible le châssis 6 et les éléments associés.

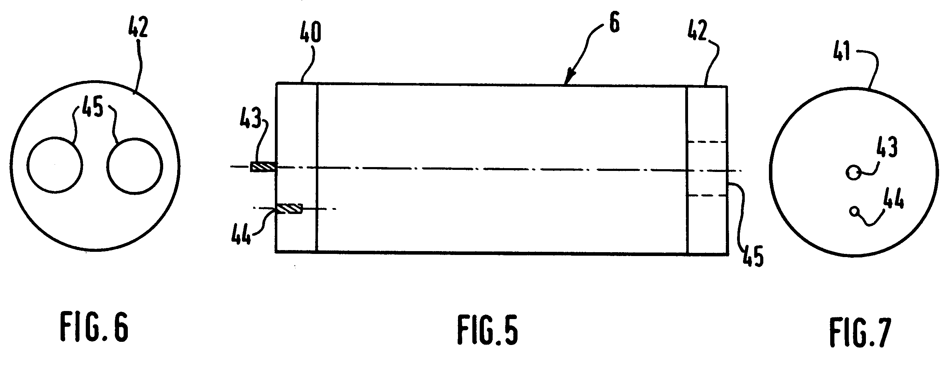

Ainsi qu'il ressort notamment des figures 5 à 7, le châssis 6 est un tube en "invar" (par exemple de 250 mm. de diamètre, 600 mm de long, de masse 3 kg), fermé à une extrémité par un barillet 40 portant un miroir primaire 41 et à l'autre extrémité par une plaque de fermeture 42. Sur la face arrière du barillet se trouve une vis 43 de type M8 de longueur 7 mm située au centre de la surface destinée à recevoir l'accéléromètre 21 et un alésage fileté 44 de type M3 et de profondeur 5 mm situé 65 mm en dessous de la vis 43, et destiné à recevoir la partie mobile de l'actionneur linéaire 8. La plaque de fermeture comporte deux ouvertures circulaires destinées à recevoir deux fenêtres 45 de fermeture de l'enceinte constituée par le châssis.

La charge utile 2 est un dispositif optique rétroréflecteur de type "oeil de chat" constitué du miroir primaire 41, d'un miroir secondaire 46 et des deux fenêtres de fermeture 45. Ce dispositif permet de renvoyer le faisceau lumineux incident dans la direction opposée, tout en étant très peu sensible aux mouvements latéraux et angulaires dus aux imperfections du système 4 de guidage. Les fenêtres (ou lames) de fermeture assurent l'étanchéité aux poussières de l'intérieur du châssis afin d'éviter la dégradation des qualités optiques qui résulteraient d'un dépôt de poussières sur les miroirs. Le miroir primaire 41 est un miroir parabolique en "zérodur" de diamètre 200 mm et d'épaisseur environ 20 mm, de poids 3 kg ; le miroir secondaire 46 est un miroir plan de diamètre 10 mm, les lames ou fenêtres 45 de fermeture sont en verre BK7, d'épaisseur 3 mm, de diamètre 80 mm, traité antireflet. Le miroir primaire est relié au barillet, le secondaire et les lames de fermeture sont fixés sur la plaque 42 de fermeture du châssis 6.

L'accéléromètre 21 est un capteur qui détecte l'accélération du châssis dans une large bande de fréquence et à des niveaux très faibles. Les capteurs accélérométriques du type piézoélectriques conviennent à ce type d'application. L'accéléromètre retenu est un BRUEL et KJAER 8318 avec son amplificateur associé BRUEL et KJAER 2813. Il vient se fixer au centre de la face arrière du barillet à l'extrémité du châssis 6. Il pèse 500 g.

L'actionneur linéaire 8 est destiné à appliquer une force entre le chariot 1 et le châssis 6. Cette force déterminée par l'asservissement B sert à annuler les vibrations du châssis 6 mesurées par le capteur 21. L'actionneur 8 doit fournir une force de faible niveau dans une large bande de fréquence. Les actionneurs linéaires de type "haut-parleur" (à bobine mobile) conviennent parfaitement à cette application. L'actionneur retenu est un PRODERA EX6 et son amplificateur associé PRODERA 647/30 W. Le corps de l'actionneur est fixé sur le chariot 1 et la partie mobile contenant la bobine est fixé sur la face arrière du barillet à l'extrémité du châssis 6.

L'asservissement B reçoit le signal de mesure 22 provenant de l'amplificateur de mesure associé à l'accéléromètre 21. Il calcule à partir du signal de mesure 22 un signal de commande 23 qui est envoyé à l'amplificateur de commande associé à l'actionneur linéaire 8. La force délivrée par l'actionneur linéaire 8 engendre une accélération du châssis 6 en opposition de phase avec l'accélération mesurée par le capteur 21 permettant ainsi de contrôler l'amplitude des vibrations du châssis 6.

L'asservissement B est du type filtre du deuxième ordre :

$$\frac{\text{signal de commande}}{\text{signal de mesure}}(p) = \frac{a_2 p^2 + a_1 p + a_o}{p^2 + b_1 p + b_o}$$

où $p = jw$ est la variable de Laplace.

Ce filtre est aisément réglé grâce à une formulation de type filtre de Kalman. Il est équivalent à un retour en accélération filtrée et intégrale de l'accélération filtrée, laquelle accélération filtrée provient du signal de mesure 22 après passage dans un filtre passe-haut du premier ordre.

L'avantage du filtre passe-haut est d'éliminer l'effet des éventuels biais sur le signal de mesure. L'avantage du retour en accélération filtrée est de pouvoir modifier la fréquence propre naturelle de la liaison flexible 7 afin d'obtenir une fréquence propre en boucle fermée adaptée aux besoins de filtrage des vibrations provenant du chariot 1. L'avantage du retour en intégrale de l'accélération filtrée est de pouvoir générer un terme d'amortissement.

Ce filtre est réalisé en analogique.

La formulation de type filtre de Kalman revient à construire un estimateur de la vitesse de la charge utile à partir de la mesure d'accélération de cette dernière. Cette estimation de vitesse est alors considérée comme le terme "intégrale de l'accélération filtrée" ci-dessus évoqué.

L'élaboration du filtre est basée sur le modèle mathématique suivant représentant le mouvement de la charge utile 2 :

$$M_2 \cdot \frac{d^2 X_2}{dt^2} = -K X_2 + F_2 \quad \text{(I)}$$

où

$M_2$ est la masse de la charge 2

$\frac{d^2 X_2}{dt^2}$ est l'accélération de la charge 2

K est la raideur de la liaison flexible 7

$F_2$ est la force appliquée par l'actionneur 8 sur la charge 2.

Cette équation s'écrit également :

$$\frac{d^2 X_2}{dt^2} + w_0^2 X_2 = u_2 \quad \text{(II)}$$

avec $w_0^2 = \frac{K}{M^2}$ et $u_2 = \frac{F_2}{M_2}$

Le signal de mesure 22 délivré par l'accéléromètre est représentatif de l'accélération de la charge 2, soit $\frac{d^2 X_2}{dt^2}$. Ce signal de mesure est noté $Y_a$

$$Y_a = \frac{d^2 X_2}{dt^2} = u_2 - w_0^2 X_2 \quad \text{(III)}$$

L'équation dynamique du filtre est alors de la forme :

$$\frac{d}{dt}\begin{bmatrix} X_2 \\ \dfrac{dX_2}{dt} \end{bmatrix} = \begin{bmatrix} 0 & 1 \\ -w_0{}^2 & 0 \end{bmatrix}\begin{bmatrix} X_2 \\ \dfrac{dX_2}{dt} \end{bmatrix} + \begin{bmatrix} 0 \\ 1 \end{bmatrix} u_2 +$$

$$+ \; L \; (Y_a - u_2 - \begin{bmatrix} -w_0{}^2 & 0 \end{bmatrix}\begin{bmatrix} X_2 \\ \dfrac{dX_2}{dt} \end{bmatrix} \; )$$

soit :

$$\frac{d}{dt}\;\hat{\tilde{X}} = \begin{bmatrix} g_1 w_0{}^2 & 1 \\ g_2 w_0{}^2 - w_0{}^2 & 0 \end{bmatrix}\;\hat{\tilde{X}} + \begin{bmatrix} -g_1 \\ 1-g_2 \end{bmatrix} u_2 + \begin{bmatrix} g_1 \\ g_2 \end{bmatrix} Y_a$$

en ayant posé

$$\hat{\tilde{X}} = \begin{bmatrix} X_2 \\ \dfrac{dX_2}{dt} \end{bmatrix} \quad et \quad L \begin{bmatrix} g_1 \\ g_2 \end{bmatrix}$$

En imposant, pour la commande $\mu_2$ un terme proportionnel à l'accélération et à la vitesse estimée, on obtient :

$$u_2 - K_4 \cdot \frac{d^2 X_2}{dt} - K_5 Y_a$$

et le correcteur final :

$$\frac{d\hat{X}}{dt} = \begin{bmatrix} g_1 w_0{}^2 & 1 + g_1 \cdot K_4 \\ (g_2-1)w_0{}^2 & K_4(g_2-1) \end{bmatrix}\;\hat{\tilde{X}} + \begin{bmatrix} g_1(1 + K_5) \\ g_2(1 + K_5)-K_5 \end{bmatrix} Y_a$$

$$u_2 = \begin{bmatrix} 0 & -K_4 \end{bmatrix}\;\hat{\tilde{X}} - K_5 Y_a$$

Les gains $g_1$, $g_2$, $K_4$ et $K_5$ sont réglés de la façon suivante :

$$g_1 = -\frac{2 z_{Kal} \cdot w_{Kal}}{w_0{}^2}$$

$$g_2 = 1 - \frac{w_{Kal}{}^2}{w_0{}^2}$$

$$K_4 = \frac{2 z_d w_0{}^2}{w_d}$$

$$K_5 = \frac{w_0{}^2}{w_d{}^2} - 1$$

7

où $z_{Kal}$ et $w_{Kal}$ sont respectivement le facteur d'amortissement et la pulsation propre du filtre de KALMAN, et $z_d$ et $w_d$ sont respectivement le facteur d'amortissement et la pulsation propre de la boucle fermée de l'asservissement B.

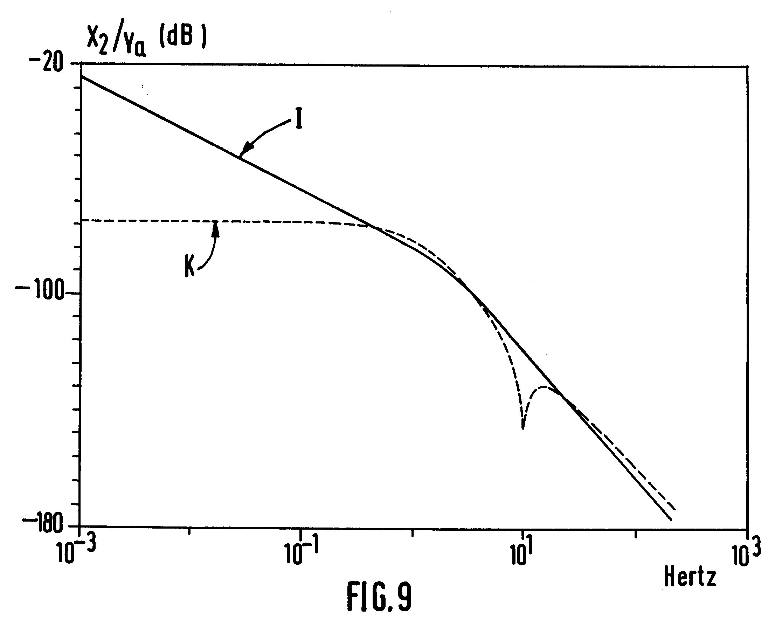

L'avantage du Kalman (K) sur un simple retour en accélération et intégrale de l'accélération (I) est mis en évidence sur la figure 9 qui représente la fonction de transfert entre le signal de mesure $Y_a$ et la position $X_2$ de la charge 2 : les éventuels biais sur $Y_a$ en sortie de l'amplificateur de mesure sont amplifiés dans la solution (I) mais il ne le sont pas dans la solution (K).

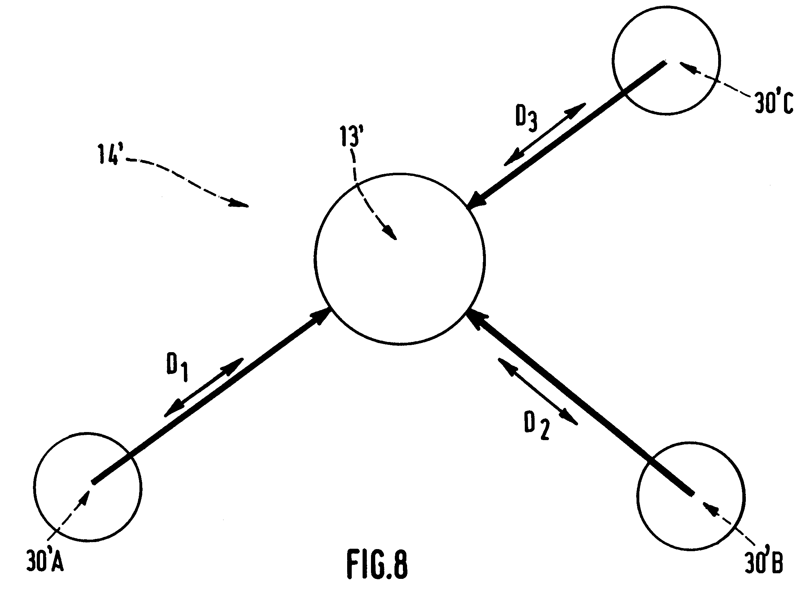

La figure 8 correspond à une configuration d'interférométrie stellaire 14' comportant des télescopes non plus fixes mais mobiles (ici au nombre de trois 30'A, 30'B, 30'C) pointés sur le même objet dans le ciel, ainsi qu'une station de recombinaison 13' recevant les trois faisceaux renvoyés par ces télescopes pour en élaborer des franges.

Pour éliminer l'influence de la rotation de la Terre, on pourrait prévoir comme précédemment des lignes à retard a priori différentes (en nombre au moins égal à deux) ; au plus l'un des "bras" de l'interféromètre renverrait alors directement son rayonnement vers la station de recombinaison 13'.

Toutefois, il peut être avantageux dans certains cas, pour des raisons astrophysiques, de rendre mobiles les télescopes sauf au plus un d'entre eux.

Dans la configuration de la figure 8, ces télescopes sont mobiles selon une direction dirigée vers la station de recombinaison, la charge utile 2 de la figure 2 étant alors remplacée par le télescope lui-même en changeant bien sûr les dimensions des éléments constitutifs du dispositif de support de cette charge utile.

Dans le cas où les télescopes sont mobiles et suffisamment compacts pour que leur structure soit rigide ou dans le cas où les télescopes sont remplacés par de simples sidérostats (miroir plan), il peut être avantageux de placer le dispositif de support de la charge utile incluant la boucle d'asservissement en stabilisation (B) au niveau du miroir plan tertiaire du télescope ou au niveau du miroir plan qui constitue le sidérostat, et non plus entre le chariot mobile qui porte le télescope et l'ensemble du télescope.

Dans ce cas la charge utile 2 est le miroir plan, la liaison flexible 7 relie le miroir plan 60 à son support 61 appelé "barillet", la direction DD du débattement relatif autorisé par cette liaison flexible est la direction perpendiculaire au plan du miroir. L'actionneur 8 agit sur le miroir plan selon la direction du débattement, le capteur inertiel dit accéléromètre 21 est fixé au dos du miroir plan et mesure l'accélération du miroir plan dans la direction du débattement. Le signal 22 de l'accéléromètre est traité par la boucle d'asservissement B de la même façon que ce qui est décrit précédemment. On remarque que dans ce cas, la direction D, $D_1$, $D_2$, $D_3$ de déplacement du télescope n'est plus parallèle à la direction du débattement relatif autorisé par la liaison flexible 7.

Bien entendu, il est possible d'apporter des modifications à la description donnée ci-dessus sans sortir du cadre de l'invention limité par les revendications ci-jointes. En particulier, pour un meilleur contrôle des vibrations basse-fréquence, il peut être intéressant soit d'utiliser à la place de l'accéléromètre 21 du type piézoélectrique un accéléromètre 21 du type pendule asservi, soit d'ajouter un second capteur de position 50 mesurant la position relative de la charge utile 2 et du châssis 6. Ces deux modifications possibles sont discutées ci-après.

Un accéléromètre du type pendule asservi est constitué d'un pendule de masse donnée, d'une cage magnétique dans laquelle est placé le pendule, d'un capteur de position mesurant la position du pendule dans la cage, d'un moteur couple permettant d'exercer un couple sur le pendule et d'une boucle d'asservissement visant à maintenir le pendule dans sa position "zéro". Le couple fourni par le moteur pour maintenir la position "zéro" est alors une mesure de la force s'appliquant sur la masse du pendule et donc une mesure de l'accélération subie par le pendule.

Plusieurs technologies d'accéléromètre de type pendule asservi existent sur le marché (pivot flexible, pivot charnière, pendule en silice, pendule en matériau amagnétique ...). De tels accéléromètres sont fabriqués entre autres par la Société SEPTA en France et par la Société SUNDSTRAND Corp. aux U.S.A.

Les accéléromètres de type pendule asservi qui nous intéressent pour notre application (SEPTA A889 ou Q-Flex) sont de taille et de forme extérieure analogues à celles des accéléromètres de type piézoélectrique et peuvent dont leur être substitués sans difficulté. Bien entendu, l'axe sensible de l'accéléromètre de type pendule asservi est parallèle à la direction du déplacement à contrôler (D, $D_1$, $D_2$, $D_3$).

Le signal de l'accéléromètre de type pendule asservi est traité par la boucle d'asservissement B de la même façon que dans la solution utilisant un accéléromètre de type piézoélectrique.

L'utilisation d'un accéléromètre de type pendule asservi présente l'avantage d'un meilleur contrôle des vibrations basse-fréquence car, contrairement à l'accéléromètre de type piézoélectrique, l'accéléromètre de type pendule asservi mesure les accélérations basse-fréquence jusqu'au continu.

L'adjonction, en plus du capteur inertiel constitué par l'accéléromètre, d'un second capteur de position mesurant, à l'échelle sub-micronique, la position relative entre la charge utile 2 et le châssis 6, est également une modification permettant un meilleur contrôle des basses-fréquences.

Ce second capteur de position peut être de type capacitif, inductif ou autre. Des capteurs de position capacitifs convenant pour cette application sont commercialisés par la Société "FOGALE nanotech" en France.

Le signal de ce second capteur de position est ensuite traité dans la boucle d'asservissement B modifiée pour recevoir à la fois le signal de l'accéléromètre 21 et celui du second capteur de position 50. Ces deux signaux sont traités selon un principe "cross-over" qui consiste à filtrer passe-bas le signal du capteur de position et passe-haut le signal de l'accéléromètre avant de les combiner pour générer le signal de commande 23.

Il va de soi que la description qui précède n'a été proposée qu'à titre d'exemple non limitatif et que de nombreuses variantes peuvent être proposées par l'homme de l'art sans sortir du cadre de l'invention. Ainsi notamment, l'invention peut être mise en oeuvre dans les lignes à retard de dispositifs de spectroscopie par transformée de FOURIER.

**Revendications**

1. Dispositif de commande en déplacement sans vibrations destiné au contrôle statique et dynamique d'un élément optique (2, 30'A-30'C) mobile, au sein d'un dispositif interférométrique (14, 14'), suivant une direction (D, D1, D2, D3), comportant une voie de guidage (4), un chariot (1) portant une charge utile comportant cet élément optique et mobile le long de la voie de guidage, un moteur (3) pour l'entraînement de ce chariot le long de cette voie de guidage, un élément de commande en entraînement (A) connecté à ce moteur d'entraînement pour déplacer ce chariot selon une loi de consigne prédéterminée, cette charge utile étant liée au chariot (1) par des éléments (7) de liaison flexible autorisant parallèlement à ladite direction (D, D1, D2) un débattement relatif entre le chariot et la charge utile, et au moins un actionneur (8) étant prévu pour agir sur au moins une partie de l'élément optique sous le contrôle d'au moins une boucle d'asservissement en stabilisation (B) connectée à au moins un second capteur (21), ce dispositif étant caractérisé en ce que cette boucle d'asservissement en stabilisation (B) est indépendante de l'élément (A) de commande en entraînement, en ce que le second capteur (21) est un accéléromètre porté par la charge utile et sensible à l'accélération de la charge utile parallèlement à ladite direction (D, D1, D2), en ce que l'actionneur (8) agit sur l'ensemble de la charge utile en prenant appui sur le chariot, en ce que cette boucle d'asservissement en stabilisation comporte un étage de filtrage du signal (22) de l'accéléromètre, et en ce que l'élément de commande en entraînement (A) comporte une boucle d'asservissement connectée à un capteur de position (5) adapté à détecter la position du chariot sur la voie de guidage.

2. Dispositif selon la revendication 1, caractérisé en ce que l'étage de filtrage de la boucle d'asservissement en stabilisation est du deuxième ordre, admettant une fonction de transfert F(p) de la forme :

$$F(p) \; = \; \frac{a_2 p^2 \; + \; a_1 p \; + \; a_o}{p^2 \; + \; b_1 p \; + \; b_o}$$

3. Dispositif selon la revendication 1 ou la revendication 2, caractérisé en ce que l'accéléromètre (21) est du type piézo-électrique.

4. Dispositif selon la revendication 1 ou 2, caractérisé en ce que l'accéléromètre (21) est du type pendule asservi.

5. Dispositif selon l'une quelconque des revendications 1 à 4, caractérisé en ce qu'un second capteur de position (50) mesurant la position relative de la charge utile (2) par rapport au châssis 6 est incorporé dans la boucle d'asservissement en stabilisation (B) pour la commande de l'actionneur (8).

6. Dispositif selon l'une quelconque des revendications 1 à 5, caractérisé en ce que l'actionneur (8) est du type "haut-parleur".

7. Dispositif selon l'une quelconque des revendications 1 à 6, caractérisé en ce que la voie de guidage (4) est à rouleaux croisés.

8. Dispositif selon l'une quelconque des revendications 1 à 7, caractérisé en ce que le moteur d'entraînement (3) est un moteur linéaire sans balais.

9. Dispositif selon l'une quelconque des revendications 1 à 8, caractérisé en ce que le capteur de position (5) est du type incrémental.

10. Dispositif selon l'une quelconque des revendications 1 à 9, caractérisé en ce que la boucle d'asservissement en entraînement est du type numérique position/vitesse.

11. Dispositif selon l'une quelconque des revendications 1 à 10, caractérisé en ce que l'élément optique (2) est un rétroréflecteur du type "oeil de chat".

12. Dispositif selon l'une quelconque des revendications 1 à 10, caractérisé en ce que l'élément optique est un télescope.

13. Interféromètre stellaire comportant au moins deux télescopes, une station de recombinaison interférométrique et au moins un dispositif de commande en déplacement sans vibrations selon l'une quelconque des revendications 1 à 12, pour la commande en déplacement d'au moins un élément optique de cet interféromètre, mobile selon au moins une direction.

14. Interféromètre stellaire selon la revendication 13, caractérisé en ce que ce dispositif porte un rétroréflecteur du type "oeil de chat" dans une ligne à retard associé à l'un des télescopes.

15. Interféromètre stellaire selon la revendication 13, caractérisé en ce que le dispositif porte l'un des télescopes, lequel est mobile selon une direction passant par la station de recombinaison interférométrique..


## Patentansprüche

1. Vorrichtung zur vibrationsfreien Bewegungssteuerung für die statische und dynamische Steuerung eines beweglichen optischen Elements (2, 30'A-30'C) in einer interferometrischen Vorrichtung (14, 14') in einer Richtung (D, D1, D2, D3), umfassend eine Führungsbahn (4), einen Wagen (1), der eine dieses optische Element aufweisende Nutzlast trägt und längs der Führungsbahn beweglich ist, einen Motor (3) zum Antrieb dieses Wagens längs dieser Führungsbahn, ein an diesen Antriebsmotor angeschlossenes Antriebssteuerelement (A) zum Bewegen dieses Wagens gemäß einer vorbestimmten Sollgesetzmäßigkeit, wobei diese Nutzlast mit dem Wagen (1) durch flexible Verbindungselemente (7) verbunden ist, die parallel zu dieser Richtung (D, D1, D2) einen relativen Ausschlag zwischen dem Wagen und der Nutzlast zulassen, und wenigstens ein Betätigungsorgan (8) vorgesehen ist, um auf wenigstens einen Teil des optischen Elements unter der Steuerung durch wenigstens eine Stabilisierungsregelschleife (B) einzuwirken, die mit wenigstens einem zweiten Fühler (21) verbunden ist, wobei diese Vorrichtung dadurch gekennzeichnet ist, daß diese Stabilisierungsregelschleife (B) vom Antriebssteuerelement (A) unabhängig ist, daß der zweite Fühler (21) ein Beschleunigungsmesser ist, der von der Nutzlast getragen ist und für die Beschleunigung der Nutzlast parallel zu dieser Richtung (D, D1, D2) empfindlich ist, daß das Betätigungsorgan (8) auf die gesamte Nutzlast einwirkt, indem es sich am Wagen abstützt, daß diese Stabilisierungsregelschleife eine Stufe zum Filtern des Signals (22) des Beschleunigungsmessers besitzt und daß das Antriebssteuerelement (A) eine Regelschleife umfaßt, die an einen Stellungsfühler (5) angeschlossen ist, der die Stellung des Wagens auf der Führungsbahn erfassen kann.

2. Vorrichtung nach Anspruch 1, dadurch gekennzeichnet, daß die Filterstufe der Stabilisierungsregelschleife der zweiten Ordnung ist, die eine Übertragungsfunktion F(p) der Form

$$F(p) = \frac{a_2 p^2 + a_1 p + a_o}{p^2 + b_1 p + b_o}$$

gestattet.

3. Vorrichtung nach Anspruch 1 oder Anspruch 2, dadurch gekennzeichnet, daß der Beschleunigungsmesser (21) ein piezoelektrischer Beschleunigungsmesser ist.

4. Vorrichtung nach Anspruch 1 oder 2, dadurch gekennzeichnet, daß der Beschleunigungsmesser (21) ein Beschleunigungsmesser mit geregeltem Pendel ist.

5. Vorrichtung nach einem der Ansprüche 1 bis 4, dadurch gekennzeichnet, daß ein zweiter Stellungsfühler (50), der die Relativstellung der Nutzlast (2) bezüglich des Chassis (6) mißt, der Stabilisierungsregelschleife (B) zur Steuerung des Betätigungsorgans (8) eingegliedert ist.

6. Vorrichtung nach einem der Ansprüche 1 bis 5, dadurch gekennzeichnet, daß das Betätigungsorgan (8) vom Typ "Lautsprecher" ist.

**7.** Vorrichtung nach einem der Ansprüche 1 bis 6, dadurch gekennzeichnet, daß die Führungsbahn (4) kreuzweise angeordnete Rollen besitzt.

**8.** Vorrichtung nach einem der Ansprüche 1 bis 7, dadurch gekennzeichnet, daß der Antriebsmotor (3) ein Linearmotor ohne Bürsten ist.

**9.** Vorrichtung nach einem der Ansprüche 1 bis 8, dadurch gekennzeichnet, daß der Stellungsfühler (5) inkremental arbeitet.

**10.** Vorrichtung nach einem der Ansprüche 1 bis 9, dadurch gekennzeichnet, daß die Antriebsregelschleife eine digitale Stellungs/Geschwindigkeits-Regelschleife ist.

**11.** Vorrichtung nach einem der Ansprüche 1 bis 10, dadurch gekennzeichnet, daß das optische Element (2) ein Retroreflektor vom Typ "Katzenauge" ist.

**12.** Vorrichtung nach einem der Ansprüche 1 bis 10, dadurch gekennzeichnet, daß das optische Element ein Teleskop ist.

**13.** Stellarinterferometer, umfassend wenigstens zwei Teleskope, eine interferometrische Rekombinationsstation und wenigstens eine Vorrichtung zur vibrationsfreien Bewegungssteuerung nach einem der Ansprüche 1 bis 12 für die Steuerung der Bewegung wenigstens eines optischen Elements dieses Interferometers, das in wenigstens einer Richtung beweglich ist.

**14.** Stellarinterferometer nach Anspruch 13, dadurch gekennzeichnet, daß diese Vorrichtung einen Retroreflektor vom Typ "Katzenauge" in einer einem der Teleskope zugeordneten Verzögerungsstrecke trägt.

**15.** Stellarinterferometer nach Anspruch 13, dadurch gekennzeichnet, daß die Vorrichtung das eine der Teleskope trägt, das in einer durch die interferometrische Rekombinationsstation laufenden Richtung beweglich ist.

## Claims

**1.** Device for static and dynamic control of vibration-free displacement in a given direction (D, D1, D2, D3) of a mobile optical element (2, 30'A-30'C) of an interferometry device (14, 14') comprising a guide track (4), a carriage (1) carrying a payload including said optical element and movable along the guide track, a drive motor (3) by which said carriage is driven along said guide track, drive control means (A) connected to said drive motor to drive said carriage according to a predetermined law, flexible linkage means (7) between said payload and said carriage (1) enabling relative movement between the payload and the carriage parallel to said direction (D, D1, D2) and at least one actuator (8) adapted to operate on at least part of the optical element under the control of at least one stabilization control loop (B) connected to at least one second sensor (21), which device is characterized in that said stabilization control loop (B) is independent of the drive control means (A), in that the second sensor (21) is an accelerometer carried by the payload and responsive to acceleration of the payload parallel to said direction (D, D1, D2), in that the actuator (8) operates between the whole of the payload and the carriage, in that said stabilization control loop comprises filter means for filtering the signal (22) from the accelerometer, and in that the drive control means (A) include a control loop connected to a position sensor (5) adapted to sense the position of the carriage on the guide track.

**2.** Device according to claim 1 characterized in that the filter means in the stabilization control loop is a second order filter having a transfer function F(p) of the form:

$$F(p) = \frac{a_2 p^2 + a_1 p + a_o}{p^2 + b_1 p + b_o}$$

**3.** Device according to claim 1 or claim 2 characterized in that the accelerometer (21) is a piezoelectric accelerometer.

**4.** Device according to claim 1 or claim 2 characterized in that the accelerometer (21) is a slaved pendulum accelerometer.

5. Device according to any one of claims 1 to 4 characterized in that a second position sensor (50) measuring the position of the payload (2) relative to the chassis (6) is incorporated into the stabilization control loop (B) to control the actuator (8).

6. Device according to any one of claims 1 to 5 characterized in that the actuator (8) is of the loudspeaker voice coil type.

7. Device according to any one of claims 1 to 6 characterized in that the guide track (4) is a crossed roller guide track.

8. Device according to any one of claims 1 to 7 characterized in that the drive motor (3) is a brushless linear motor.

9. Device according to any one of claims 1 to 8 characterized in that the position sensor (5) is an incremental sensor.

10. Device according to any one of claims 1 to 9 characterized in that the drive control loop is a digital position/speed control loop.

11. Device according to any one of claims 1 to 10 characterized in that the optical element (2) is a "cat's eye" reflector.

12. Device according to any one of claims 1 to 10 characterized in that the optical element is a telescope.

13. Stellar interferometer comprising at least two telescopes, an interferometry recombination station and at least one device according to any one of claims 1 to 12 for static and dynamic control of vibration-free displacement of at least one optical element of said interferometer mobile in at least one direction

14. Stellar interferometer according to claim 13 characterized in that said device comprises a "cat's eye" reflector in a delay line associated with one telescope.

15. Stellar interferometer according to claim 13 characterized in that the device carries one telescope which is mobile in a direction passing through said interferometry recombination station.

FIG.1

FIG.2

FIG.3

FIG.4

FIG.7

FIG.5

FIG.6

FIG.8

EP 0 398 772 B1

FIG.9

FIG.10